# EUROPÄISCHE PATENTSCHRIFT

(11) **EP 0 416 206 B1**
(45) Veröffentlichungstag und Bekanntmachung des Hinweises auf die Patenterteilung: **25.08.1993**
(21) Anmeldenummer: 90108321.2
(22) Anmeldetag: 02.05.1990
(51) Int. Cl.: A01B 3/42

(54) **Folgesteuerung bzw. Vorrangschaltung für einen Drehpflug mit Rahmeneinschwenkung**
Prioritysequencing for hydraulically operated turnwrest plough
Contrôle de séquence prioritaire pour charrue reversible hydraulique

(30) Priorität: 05.09.1989 DE 8910585 U
(43) Veröffentlichungstag der Anmeldung: 13.03.1991
(73) Patentinhaber: WEBER-HYDRAULIK GmbH, D-74361 Güglingen (DE)
(72) Erfinder: Obermeyer, Günter, D-7129 Güglingen (DE)
(74) Vertreter: Säger, Manfred, Dipl.-Ing.

(56) Entgegenhaltungen:
- EP-A- 0 067 286
- EP-A- 0 198 405
- DE-A- 3 218 631
- DE-A- 3 908 985
- FR-A- 2 558 027

## Beschreibung

Die Erfindung betrifft eine Folgesteuerung bzw. Vorrangschaltung für einen Drehpflug mit Pflugrahmeneinschwenkung, wobei der Drehpflug über einen doppeltwirkenden Drehzylinder zur Drehung des Pflugrahmens und einen doppeltwirkenden Schwenkzylinder zum Ein- und Ausschwenken des Pflugrahmens verfügt, welche zueinander parallel geschaltet und vorzugsweise über ein gemeinsames Steuerventil in den Zuleitungen betätigbar sind, und zwar gemäß dem Oberbegriff des Hauptanspruches.

Bei Drehpflügen muß zum Drehen des Pfluges der Schwerpunkt des Pflugrahmens möglichst in die ideelle Achse verlegt werden, um ein möglichst kleines Drehmoment zum Wenden zu erhalten. Außerdem muß der Hüllkreis-Durchmesser, den das letzte Pflugschar beim Wenden beschreibt, so klein als möglich sein, damit das Pflugschar und ein meist noch dahinter angebrachtes Stützrad beim Drehen nicht auf den Boden aufschlagen, wobei dieser gesamte Vorgang automatisch ablaufend und nur von einem Steuergerät, vorzugsweise am Schlepper eingeleitet werden soll. Hierbei gilt folgender Ablauf:
1. Einschwenken des Pflugrahmens (Schwenkzylinder ausfahren)
2. Pflugdrehung (mit Hilfe des Drehzylinders)
3. Ausschwenken des Pflugrahmens (Schwenkzylinder einfahren).

Dieser oben aufgeführte Ablauf muß folgerichtig eingehalten werden. Dies wird bisher, aufgrund der verschiedenen Kräfte, die zum Drehen und zum Einschwenken vorliegen, durch Einschaltung von entsprechenden Drosselventilen oder Vorspannventilen erreicht. Als Stand der Technik wird auf die DE-A-27 38 816 und die gattüngsbildende DE-A-32 18 631 hingewiesen.

Beide der bekannten Steuerungsvarianten haben entscheidende Nachteile: bei der Drosselsteuerung ist ein exakter Ablauf kaum zu erzielen, da der Durchfluß der Drosselventile genau auf jede Pflugtype abgestimmt werden muß. Diese Steuerung ist außerdem viskositätsabhängig. Die Drosselquerschnitte müssen teilweise so klein ausgeführt werden, daß für den Gesamtablauf eine zu lange Zeit benötigt wird.

Bei der anderen Variante, nämlich der Steuerung mit Vorspannventilen gemäß DE-A-3218631 und somit gemäß den Oberbegriffen der unabhängigen Ansprüche 1 und 21, werden aufgrund dieser Ventile hohe Verluste erzeugt. Während der Schwenkzylinder in der ersten Drehphase (Ausfahren des Schwenkzylinders) mit dem vollen Schlepperdruck beaufschlagt werden kann, steht dem parallel geschalteten Drehzylinder nur die Druckdifferenz von Schleppdruck, vermindert um den Vorspannventildruck, zur Verfügung. Diese Druckdifferenz und damit geringere Kraft am Drehzylinder reicht oft nicht aus, um den Pflugrahmen zu drehen. Als Folge wird dann ein größerer und damit teuerer Drehzylinder vorgesehen. Wird die Druckdifferenz groß gehalten, also ein niedriger Vorspannventildruck ausgewählt, so ist mit Fehlschaltungen und Funktionsausfall zu rechnen.

Der Erfindung liegt die Aufgabe zugrunde, eine Folgesteuerung bzw. ein entsprechendes Verfahren vorzuschlagen, die unter Vermeidung der vorstehend beschriebenen Nachteile Fehlschaltungen nicht zulassen.

Die Aufgabe wird bei einer gattungsgemäßen Vorrichtung gemäß dem Oberbegriff des Hauptanspruches erfindungsgemäß durch dessen kennzeichnende Merkmale gelöst.

Bei der erfindungsgemäßen Folgesteuerung wird mit Vorteil die Zuleitung des Drehzylinders gar nicht gesteuert, so daß am Drehzylinder immer der volle Druck anliegt. Gesteuert wird demgegenüber die Rücklaufleitung des Drehzylinders. Solange die Rücklaufleitung des Drehzylinders gesperrt ist, kann der Drehzylinder nicht einfahren. Das Einfahren des Drehzylinders kann infolgedessen solange hinausgezögert werden, bis der Schwenkzylinder ausgefahren ist, also der Pflugrahmen eingeschwenkt ist. Erst wenn der Schwenkzylinder ausgefahren ist, wird die Rücklaufleitung des Drehzylinders geöffnet, was erfindungsgemäß dadurch erfolgt, daß in der Steuerleitung des Rücklaufsperrventils ein Druck oberhalb eines vorgegebenen Schwellwertes aufgebaut wird, und das Rücklaufsperrventil auf diese Weise geöffnet wird. Da der Schwellwert erfindungsgemäß in einem druckabhängigen Schaltorgan vorgegeben werden kann, welches außerhalb der Zuleitung des Drehzylinders liegt, wirkt sich ein Druckabfall an diesem Schaltorgan mit Vorteil nicht auf den Druck in der Zuleitung des Drehzylinders aus.

Zur Vorgabe des Schwellwertes ist in der Steuerleitung ein Druckventil eingesetzt. Dieses Druckventil öffnet, wenn der Schwellwert überschritten wird. Das Ventil zur Einstellung des Schwellwertes ein 2/2-Ventil, welches mit einer entsprechenden Rückstellkraft beaufschlagt ist, die durch den Druck in der Steuerleitung überwunden werden muß, um das Ventil zu Öffnen. Das Rücklaufsperrventil ist ein einfaches, steuerbares Rückschlagventil. Die Steuerleitung für das Rücklaufsperrventil zweigt von der Zuleitung des Drehzylinders ab.

Die Zuleitungen der zueinander parallel geschalteten Zylinder sind direkt miteinander verbunden. Wenn der Schwenkzylinder vollständig ausgefahren ist, baut sich demzufolge der Druck in der Zuleitung des Drehzylinders auf, welcher auf die Steuerleitung des Rücklaufsperrventils übertragen wird. Der Schwenkzylinder ist erfindungsgemäß vorzugsweise mit einer Dämpfung ausgerüstet, um hierdurch den Druckaufbau im Drehzylinderzweig der Folgesteuerung günstig zu beeinflussen.

Mit der erfindungsgemäßen Folgesteuerung, die die vorgenannten Merkmale aufweist, kann mit Vorteil der Beginn des Wiedereinfahrens des Schwenkzylinders in Abhängigkeit von einer bestimmten Drehstellung des Pflugrahmens eingestellt werden. Dies bedeutet, daß der Pflugrahmen wieder ausgeschwenkt wird, wenn einerseits die Drehung des Pflugrahmens noch nicht ganz abgeschlossen ist, aber andererseits der Pflugrahmen bereits soweit gedreht worden ist, daß die Ausschwenkung des Pflugrahmens unbehindert erfolgen kann, also insbesondere ohne daß die ausgeschwenkten Pflugkörper die weitere Drehung des Pfluges behindern. Da bei der erfindungsgemäßen Folgesteuerung nicht das Ende der Drehbewegung des Pflugrahmens abgewartet werden muß, ist ein besonders zügiges Wenden und Wiederinbetriebnehmen des Drehpfluges möglich.

Eine Weiterbildung der erfindungsgemäßen Folgesteuerung sieht vor, daß das gesteuerte Ventil der Steuereinrichtung zeitgesteuert ist. Das Einfahren des Schwenkzylinders und damit das Ausschwenken des Pflugrahmens kann somit zu einem vorgebbaren Zeitpunkt beginnen, wobei dieser Zeitpunkt auf die Drehgeschwindigkeit des Pflugrahmens abgestimmt wird. Vorzugsweise wird die Steuereinrichtung so eingestellt, daß das Ventil etwa 3 s nach der halben Drehung des Pflugrahmens öffnet.

Üblicherweise fährt der Drehzylinder zur vollen Drehung des Pflugrahmens zunächst ein und dann wieder aus, wobei er einen oberen Totpunkt durchläuft. Dieses Ein- und Wiederausfahren des Drehzylinders wird über .das gemeinsame Steuerventil der beiden Zylinder gesteuert. Ist der Drehzylinder eingefahren, so wird das Steuerventil umgeschaltet. Zu diesem Zeitpunkt ist gerade die halbe Drehung des Pflugrahmens vollendet. Nach einer Weiterbildung der Erfindung ist daher vorgesehen, mit dem Umschalten des gemeinsamen Steuerventils auch den Beginn der Zeitsteuerung der Steuereinrichtung auszulösen, so daß die Öffnung des gesteuerten Ventils der Steuereinrichtung nach einem bestimmten Zeitpunkt des Umschaltens des Steuerventils erfolgt.

Eine Zeitsteuerung der Steuereinrichtung wird nach einer weiteren Weiterbildung der Erfindung dadurch erreicht, daß die Rücklaufleitung des Schwenkzylinders entlang eines Abschnittes in zwei Zweige geteilt ist, daß in dem ersten Zweig ein in Richtung auf den Schwenkzylinder schließendes Rückschlagventil eingesetzt ist, daß im zweiten Zweig ein 2/2-Ventil als gesteuertes Ventil eingesetzt ist, daß in Ruhestellung gesperrt ist, wobei die Ruhestellung gegen eine der Größe nach vorgegebene Rückstellkraft durch eine Steuerleitung aufrechterhalten wird, durch die Druck erzeugende Druckflüssigkeit aus der Zuleitung des Schwenkzylinders auf das Ventil wirkt, daß die Steuerleitung des Ventils unterbrechbar ist und daß ein Abfluß in der unterbrochenen Steuerleitung vorgesehen ist, durch den ein der Rückstellkraft entgegenwirkendes Steuermediumpolster mit einer vorgegebenen Zeitkonstante abfließen kann.

Beim Ausfahren des Schwenkzylinders, also beim Einschwenken des Pflugrahmens, fließt die Druckflüssigkeit über den ersten Zweig der Rücklaufleitung zurück, um ein Ausfahren des Schwenkzylinders zu gestatten. Dieser erste Zweig der Rücklaufleitung ist bei einer Richtungsumkehrung, d.h. nach dem Umschalten des Steuerventils gesperrt, so daß nur der zweite Zweig der Rücklaufleitung nunmehr noch als Zuleitung für den Schwenkzylinder zur Verfügung steht. Auch dieser zweite Zweig ist zunächst gesperrt. Hierzu befindet sich das gesteuerte Ventil in seiner sperrenden Ruhestellung, die dadurch aufrechterhalten wird, daß über eine Steuerleitung Druck auf das Ventil gegen eine Rückstellkraft wirkt. Diese Steuerleitung kann entweder unmittelbar beim Umschalten des Steuerventils oder auch einige Zeit später unterbrochen werden, so daß sich der Rückstellkraft des Ventils nur noch ein Steuermittelpolster entgegenstellt, welches nicht mehr über die Steuerleitung versorgt wird. Dieses Steuermittelpolster wird mit einer vorgegebenen Zeitkonstante kontinuierlich abgebaut, und zwar vorzugsweise über einen Abfluß. Dadurch erhält die Rückstellkraft immer mehr die Oberhand, so daß sich das gesteuerte Ventil der Steuereinrichtung während einer vorgegebenen Zeitdauer schließlich in die Öffnungsstellung bewegt.

Vorzugsweise weist der Abfluß der Steuerleitung eine Blende auf, so daß die Zeitkonstante bzw. die Zeitdauer für den Abbau des Steuermittelpolsters und somit für das Öffnen des Ventils dadurch eingestellt werden kann, daß der Öffnungsradius der Blende und die Rückstellkraft des Ventils in einer bestimmten Weise aufeinander abgestimmt werden.

Bevorzugt ist der Rücklaufzweig des Schwenkzylinders in der vorgeschilderten Weise in zwei Zweige geteilt. Es könnte aber auch ein gesteuertes Ventil in der Rücklaufleitung vorgesehen werden, die einen zweiten Zweig der Rücklaufleitung entbehrlich macht, weil das Ventil beispielsweise so gesteuert ist, daß es während des Ausfahrens des Schwenkzylinders geöffnet, danach geschlossen und schließlich wieder gegen Ende der Drehbewegung des Pflugrahmens geöffnet ist.

Eine andere Weiterbildung der Erfindung sieht vor, daß in der Rücklaufleitung des Schwenkzylinders ein gesteuertes Ventil eingesetzt ist, welches ein Drehventil ist, dessen Durchgänge drehwinkelabhängig in Funktion treten, wobei der Drehwinkel des Drehventils von der Drehstellung des Pflugrahmens abhängig ist. Vorzugsweise kann das Drehventil über die Pflugdrehwelle angetrieben sein.

Eine bevorzugte Ausbildung des Drehventils sieht vor, daß das Drehventil bis zum Ausfahren des Schwenkzylinders geöffnet ist und nach einer darauffolgenden Schließphase erst wieder etwa 20° bis 30° vor dem Abschluß der Drehung des Pflugrahmens zum Einfahren des Schwenkzylinders öffnet.

Eine erfindungsgemäße Folgesteuerung kann auch realisiert werden, wenn der Drehzylinder so ausgebildet und eingesetzt wird, daß er für jeweils eine Drehung des Pflugrahmens jeweils nur ein- oder ausfährt.

Die gestellte Aufgabe wird erfindungsgemäß, durch ein Verfahren zur Betätigung eines Drehpfluges mit Pflugrahmeneinschwenkung, für das auch selbständig Schutz beansprucht wird, gelöst, welches sich durch eine Steuerventilanordnung auszeichnet, die in den Rücklaufleitungen der Zylinder zugunstens des Hydraulikmittelabflusses des vorrangigen Zylinders in Abhängigkeit von diesem Hydraulikmittelabfluß selbst geregelt bzw. betätigt wird.

Bei diesem erfindungsgemäßen Verfahren, wird ähnlich wie bei den vorgeschilderten, erfindungsgemäßen Folgesteuerungen jeweils der Rücklauf aus den Zylindern geregelt. Dabei wird aber bei dem erfindungsgemäßen Verfahren gemäß der letztgenannten Lösungsalternative der Rücklauf nicht abhängig von einem Druckaufbau geregelt, sondern in Abhängigkeit von dem Hydraulikmittelabfluß des vorrangigen Zylinders selbst. Dies bedeutet, daß der Hydraulikmittelabfluß des vorrangigen Zylinders bevorzugt wird, solange ein solcher Abfluß stattfindet.

Erst wenn der Hydraulikmittelabfluß dieses Zylinders abgeschlossen ist, wird der Hydraulikmittelabfluß des nachrangigen Zylinders verstärkt durchgeführt. Die Rücklaufsteuerung erfolgt damit quasi mengenabhängig von dem abfließenden Öl des vorrangigen Zylinders.

Ein Vorteil des erfindungsgemäßen Verfahrens besteht insbesondere darin, daß durch geringe Abwandlung jeweils entweder eine reine Folgesteuerung verwirklicht werden kann, oder aber auch eine Vorrangschaltung mit verlagertem Parallellauf des nachrangigen Zylinders, wobei dieser nachrangige Zylinder vorzugsweise zunächst im Kriechgang betätigt wird. Diese beiden unterschiedlichen Steuerungen können dadurch erreicht werden, daß der Rücklauf des nachrangigen Zylinders entweder zunächst völlig gesperrt wird oder lediglich gedrosselt wird. Eine Drosselung ist beispielsweise in einfacher Weise mit einer Blende in der Rücklaufleitung, d.h., in der Steuerventilanordnung, möglich.

Eine Folgesteuerung bzw. Vorrangschaltung für einen Drehpflug, vorzugsweise zur Durchführung des genannten Verfahrens, zeichnet sich dadurch aus, daß die (jeweiligen) Rücklaufleitungen der Zylinder mit einer Steuerventilanordnung zur Steuerung des Abflusses des Hydraulikmittels aus den Zylindern ausgerüstet ist, daß die Steuerventilanordnung so ausgebildet ist, daß jeweils der Durchfluß in einer Rücklaufleitung, je nach Betätigung der Steuerventilanordnung, mengenmäßig bevorzugbar ist und daß das Betätigungselement der Steuerventilanordnung in Abhängigkeit von dem bevorzugten Durchfluß gesteuert ist.

Bevorzugte Weiterbildungen dieser Steuerung bzw. Schaltung ergeben sich aus den Unteransprüchen.

Ausführungsbeispiele, aus denen sich weitere erfinderische Merkmale ergeben, sind in der Zeichnung dargestellt. Es zeigt:
- Figur 1: ein erstes Ausführungsbeispiel einer erfindungsgemäßen Folgesteuerung, die insbesondere ein zeitgesteuertes Ventil im Schwenkzylinderzweig aufweist,
- Figur 2: ein zweites Ausführungsbeispiel einer erfindungsgemäßen Folgesteuerung, die insbesondere ein winkelabhängiges Ventil im Schwenkzylinderzweig aufweist,
- Figur 3: ein drittes Ausführungsbeispiel einer erfindungsgemäßen Folgesteuerung mit gesteuerten Wegeventilen in den Rücklaufleitungen der Zylinder,
- Figur 4: eine Schaltung ähnlich dem Ausführungsbeispiel der Fig. 3, verwirklicht als Vorrangschaltung mit überlagertem Parallellauf,
- Figur 5: ein viertes Ausführungsbeispiel einer erfindungsgemäßen Folgesteuerung entsprechend dem Ausführungsbeispiel gemäß der Fig. 3, bei der die Wegeventile in den Rücklaufleitungen durch geänderte Steuerventilanordnungen ersetzt sind, und
- Figur 6: eine Vorrangschaltung mit überlagertem Parallellauf ähnlich dem Ausführungsbeispiel gemäß der Fig. 4, verwirklicht mit den Bauelementen gemäß dem Ausführungsbeispiel der Fig. 5.

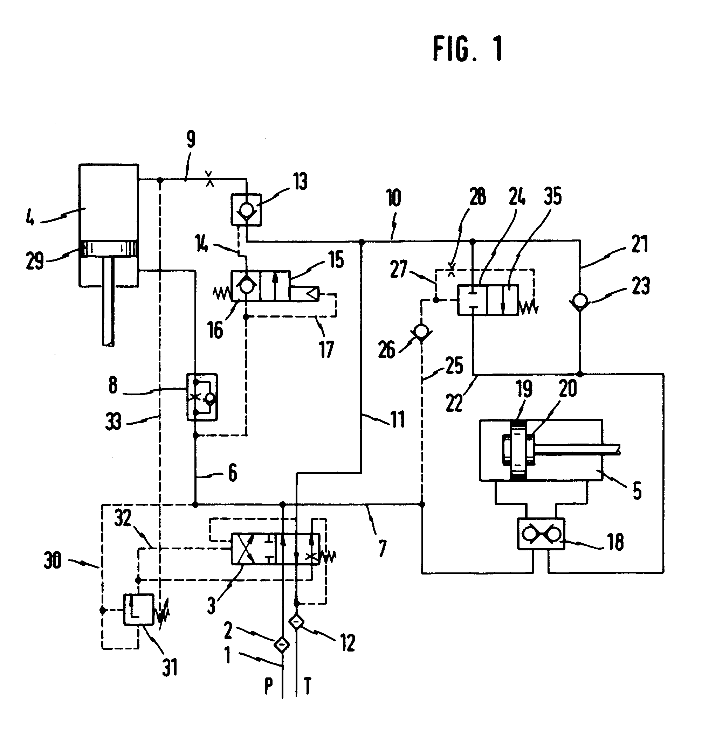

In Fig. 1 ist die Schaltung eines ersten Ausführungsbeispiels einer erfindungsgemäßen Folgesteuerung dargestellt.

Die Schaltung gemäß Fig. 1 wird über Anschlüsse P und T an eine Pumpe bzw. einen Tank eines Hydrauliksystems angeschlossen.

Von dem Anschluß P verläuft eine Zuleitung 1 mit einem Filter 2 zu einem Steuerventil 3, welches einem Drehzylinder 4 und einem Schwenkzylinder 5 zur Steuerung gemeinsam ist. Das Steuerventil ist als 4/2-Ventil ausgebildet, welches zudem ein 2/2-Ventil bezüglich von Steuerleitungen umfaßt.

Nach dem Steuerventil 3 verzweigt sich die Zuleitung 1 in eine Zuleitung 6 für den Drehzylinder und eine Zuleitung 7 für den Schwenkzylinder. Die Zuleitung 6 mündet kolbenstangenseitig im Drehzylinder 4 und weist ein Stromsteuerventil 8 auf. Kolbenseitig setzt an dem Drehzylinder 4 eine Rücklaufleitung 9 an, die sich mit einer Rücklaufleitung 10 des Schwenkzylinders zu einer gemeinsamen Rücklaufleitung 11 vereinigt, welche durch das Steuerventil 3 und einen Filter 12 zum Anschluß T führt.

In der Rücklaufleitung 9 des Drehzylinders 4 ist als Rücklaufsperrventil ein steuerbares erstes Rückschlagventil 13 eingesetzt, welches über eine erste Steuerleitung 14 angesteuert wird, die von der Zuleitung 6 des Drehzylinders 4 abzweigt. Das erste Rückschlagventil 13 schließt in Richtung auf den Anschluß P.

In die Steuerleitung 14 ist ein Druckventil 15 eingesetzt. Dieses Druckventil 15 ist ein 2/2-Ventil, welches in seiner Ruhestellung die erste Steuerleitung 14 mit einem eingebauten zweiten Rückschlagventil 16 in Richtung auf das erste Rückschlagventil 13 sperrt. Von der Steuerleitung 14 zweigt eine Ventilsteuerleitung 17 für das Druckventil 15 ab. Der Druck in dieser Ventilsteuerleitung 17 wirkt einer Rückstellkraft, der das Druckventil 15 unterliegt, entgegen, so daß das Druckventil 15 öffnet, wenn der Druck in der Ventilsteuerleitung 17 einen Wert annimmt, der den Druck der Rückstellkraft übersteigt. Vorzugsweise wird die Rückstellkraft auf einen Druck-Schwellwert von etwa 160 bar eingestellt.

Die Zuleitung 7 für den Schwenkzylinder 5 führt über ein Ventil 18 zur Kolbenseite des Schwenkzylinders 5. Die Rücklaufleitung 10 des Schwenkzylinders 5 setzt kolbenstangenseitig am Schwenkzylinder an und führt ebenfalls über das Ventil 18 zur gemeinsamen Rücklaufleitung 11. Der Kolben 19 des Schwenkzylinders 5 weist eine Dämpfungseinrichtung 20 auf.

Die Rücklaufleitung 10 des Schwenkzylinders 5 ist einem Abschnitt in zwei Rücklaufzweige, nämlich in einen ersten Rücklaufzweig 21 und einen zweiten Rücklaufzweig 22, geteilt. In dem ersten Rücklaufzweig 21 ist ein in Richtung auf den Schwenkzylinder 5 schließendes drittes Rückschlagventil 23 eingesetzt.

In dem zweiten Rücklaufzweig 22 ist ein gesteuertes Ventil 24 eingesetzt, welches als 2/2-Ventil ausgebildet ist. Das Ventil 24 wird über eine zweite Steuerleitung 25 gesteuert, die von der Zuleitung 7 des Schwenkzylinders 5 abzweigt. In der zweiten Steuerleitung 25 ist ein in Richtung auf den Anschluß T schließendes viertes Rückschlagventil 26 eingesetzt.

Auf das Ventil 24 wirkt außerdem eine Rückstellkraft, die der Einwirkung der zweiten Steuerleitung 25 entgegenwirkt. Die Ruhestellung des Ventils 24, in der das Ventil 24 den zweiten Rücklaufzweig 22 sperrt, wird somit dadurch aufrechterhalten, daß ein Steuermittel über die zweite Steuerleitung 25 auf das Ventil 24 einwirkt, welches einen Druck ausübt, der größer ist als der Druck der Rückstellkraft.

Zwischen dem vierten Rückschlagventil 26 der Steuerleitung 25 und dem gesteuerten Ventil 24 zweigt ein Abfluß 27 für Steuermittel ab. Dieser Abfluß führt bis zu der der Mündung der zweiten Steuerleitung 25 entgegengesetzten Seite des Ventils 24, also zur Rückstellkraftseite des Ventils 24. In der Abflußleitung des Abflusses 27 ist eine Blende 28 eingesetzt, die einen vorgegebenen Öffnungsradius hat und außerdem geöffnet und geschlossen werden kann. Der Öffnungsradius der Blende ist auf die Rückstellkraft des Ventils 24 abgestimmt, so daß Steuermittel aus dem Bereich zwischen dem vierten Rückschlagventil 26 und dem Ventil 24 mit einer vorgegebenen Zeitkonstante zur Rückstellkraftseite des Ventils 24 abfließt. Damit ist auch die Zeit vorgebbar, in der das Ventil 24 von der Sperr-Ruhestellung in die Öffnungsstellung schaltet, nachdem die Zufuhr von Steuermittel durch die zweite Steuerleitung 25 unterbrochen und die Blende 28 geöffnet ist. Vorzugsweise wird eine Zeit von ca. 3 s eingestellt. Hierzu wird die Rückstellkraft vorzugsweise mit ca. 10 bar vorgegeben. In der Darstellung der Fig. 1 ist die Blende 28 geschlossen. Ein Öffnen der Blende erfolgt vorzugsweise gekoppelt mit einem Umschalten des gemeinsamen Steuerventils 3. Dieses Umschalten des Steuerventils 3 korreliert, wie nachstehend geschildert wird, mit dem Bewegen des Kolbens 29 des Drehzylinders 4 durch seinen oberen Totpunkt.

Das Steuerventil 3 schaltet automatisch um, wenn der Kolben 29 des Drehzylinders 24 eingefahren ist, also sich in seinem oberen Totpunkt bewegt. Für das automatische Umschalten des Steuerventils 3 weist die Folgesteuerung insbesondere eine dritte Steuerleitung 30 auf, die von der Zuleitung 6 des Drehzylinders 4 abzweigt und ein Druckventil 31 steuert. Sobald der Drehzylinder 4 eingefahren ist, baut sich in dieser dritten Steuerleitung 30 ein Druck auf, der ausreicht, das Druckventil 31 gegen eine Rückstellkraft zu öffnen, so daß über die Fortsetzung 32 der dritten Steuerleitung 30 ein Druck auf das Steuerventil 3 wirkt, welcher ein Umschalten des Steuerventils 3 gegen eine Rückstellkraft bewirkt. Nach dem Ausfahren des Drehzylinders 4 wird das Steuerventil 3 mit Hilfe einer Rückstelleitung 33, die von der Rücklaufleitung 9 abzweigt, wieder zurückgeschaltet.

Die Folgesteuerung gemäß Fig. 1 arbeitet folgendermaßen:

Über die Zuleitungen 1 und 7 wird dem Schwenkzylinder 5 kolbenseitig Hydrauliköl zugeführt, so daß der Schwenkzylinder 5 ausfährt, und den Pflugrahmen einschwenkt, während kolbenstangenseitig aus dem Schwenkzylinder 5 Hydrauliköl über die Rücklaufleitung 21, 10, 11 abläuft.

Gleichzeitig wird dem Drehzylinder 4 über die Zuleitung 1, 6 kolbenstangenseitig Hydrauliköl zugeführt. Da aber die Rücklaufleitung 9 durch das erste Rückschlagventil 13 gesperrt ist, kann kolbenseitig kein Hydrauliköl aus dem Drehzylinder 4 entweichen, so daß der Kolben 29 des Drehzylinders 4 zunächst stehenbleibt. Sobald der Schwenkzylinder 5 vollständig ausgefahren ist, baut sich in der Zuleitung 6 des Drehzylinders 4 ein Druck auf, der über die Steuerleitung 14, 17 dem Druckventil 15 zugeführt wird.

Dieser Druck übersteigt den durch die Rückstellkraft des Druckventils 15 vorgegebenen Schwellwert, so daß das Druckventil 15 öffnet und damit über die Steuerleitung 14 auch das erste Rückschlagventil 13 in der Rücklaufleitung 9 des Drehzylinders 4 öffnet. Der Drehzylinder 4 kann somit einfahren, wenn der Schwenkzylinder 5 ausgefahren ist. Sobald der Drehzylinder 4 eingefahren ist, schaltet das gemeinsame Steuerventil 3 um, so daß nunmehr die Rücklaufleitung 11 zur Zuleitung wird. Das Hydrauliköl fließt durch die Rücklaufleitung 11 und das nur in Richtung auf den Anschluß T sperrende erste Rückschlagventil 13 kolbenseitig in den Drehzylinder 4, so daß dieser Drehzylinder 4 ausfährt. Damit wird die zweite Drehphase zur Drehung des Pflugrahmens eingeleitet. Gleichzeitig fließt Hydrauliköl über die Rücklaufleitung 11 und die Rücklaufleitung 10 in den Schwenkzylinderzweig der Steuerung. Jedoch ist der Rücklaufzweig 21 durch das dritte Rückschlagventil 23 gesperrt, und der Rücklaufzweig 22 ist ebenfalls gesperrt, weil sich das Ventil 24 noch in Sperrstellung befindet. Diese Sperrstellung des Ventils 24 hatte sich eingestellt, weil Steueröl vor Umschalten des Steuerventils 3 durch 26 die zweite Steuerleitung 25 auf das Ventil 24 gegen die Rückstellkraft einwirkte. Nach Umschalten des Steuerventils 3 ist zwar das vierte Rückschlagventil 26 in der zweiten Steuerleitung 25 geschlossen, so daß kein weiteres Steueröl von der Pumpe nachfließt, aber es befindet sich in dem Bereich zwischen dem vierten Rückschlagventil 26 und dem Ventil 24 noch ein Steuermittelpolster, welches ein Bewegen des Ventils in die Öffnungsstellung noch verändert. Dieses Steuermittelpolster fließt langsam über den Abfluß 27 und die Blende 28 zur Rückstellseite des Ventils 24 ab, so daß sich das Ventil 24 erst allmählich in seine Öffnungsstellung bewegt. Während dieser Zeit der Bewegung des Ventils 24 fährt der Drehzylinder 4 bereits fast vollständig aus. Der Schwenkzylinder 5 kann daher erst einfahren und den Pflugrahmen wieder ausschwenken, wenn die Drehung des Pflugrahmens nahezu beendet ist, so daß der ausgeschwenkte Pflugrahmen die Drehbewegung des Pflugrahmens nicht stören kann.

Mit der Folgesteuerung gemäß der Fig. 1 kann somit die Abfolge des Ein- und Ausfahrens des Drehzylinders 4 und des Schwenkzylinders 5 vorgegeben und gesteuert werden, ohne daß Druckabfälle beim Drehzylinder 4 auftreten oder Funktionsstörungen der Steuerung zu befürchten sind. Insbesondere wird ein Druckabfall am Drehzylinder jederzeit dadurch vermieden, daß das Druckventil 15 in der ersten Steuerleitung 14 eingesetzt ist, also außerhalb der Zuleitung 6. Nach einer Drehung des Pflugrahmens schaltet das Steuerventil 3 wieder um.

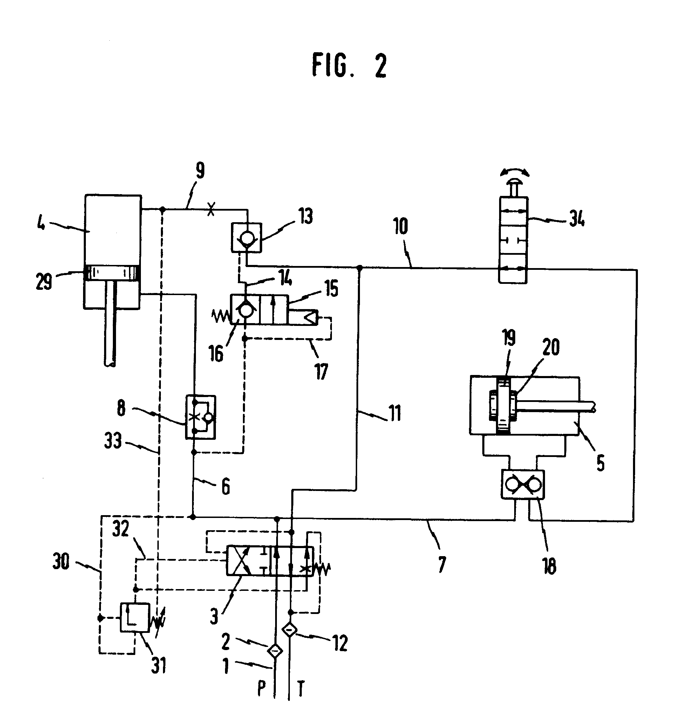

Die Fig. 2 zeigt ein zweites Ausführungsbeispiel einer erfindungsgemäßen Folgesteuerung: Die Folgesteuerung gemäß Fig. 2 entspricht weitgehend der Folgesteuerung gemäß Fig. 1. Gleiche Bauelemente sind in der Fig. 2 daher mit den gleichen Bezugszahlen bezeichnet wie in Fig. 1.

Bei der Ausführung gemäß der Fig. 2 weist die Rücklaufleitung 10 des Schwenkzylinders 5 jedoch keine Rücklaufzweige 21, 22 auf und das gesteuerte Ventil 24 in der Rücklaufleitung 10 ist durch ein anderes gesteuertes Ventil 34 ersetzt.

Dieses gesteuerte Ventil 34 gemäß der Ausführungsform der Fig. 2 ist ein Drehventil, welches etwa um 180° drehbar ist. Die Durchgänge dieses Drehventils 34 sind so angeordnet ,daß dieses während des Ausfahrens des Schwenkzylinders 5 geöffnet ist, um das Ausfahren zu ermöglichen. Sobald der Schwenkzylinder 5 ausgefahren ist, fängt der Drehzylinder 4 an einzufahren, wodurch die Pflugdrehwelle des Pflugrahmens gedreht wird. Mit dieser Pflugdrehwelle ist das Drehventil 34 gekoppelt, und zwar wird das Drehventil 34 von der Pflugdrehwelle angetrieben. Wenn die Pflugdrehwelle etwa 20° bis 30° gedreht ist, schließt das Drehventil 34 und öffnet erst wieder, wenn der Pflugrahmen bis zum Abschluß der Drehung nur noch etwa 20° bis 30° gedreht werden muß. Solange somit der Pflugrahmen nicht gedreht wird, sondern der Pflugrahmen nur eingeschwenkt werden soll, ist das Drehventil 34 offen. Es schließt nach einer Drehung des Pflugrahmens von etwa 20 bis 30° und öffnet nach einer Drehung von etwa 150 bis 160°. Auch durch diese Ventilsteuerung ist gewährleistet, daß der Pflugrahmen eingeschwenkt ist, bevor er gedreht wird, und daß ein Ausschwenken des Pflugrahmens erst erfolgt, wenn die Drehung des Pflugrahmens bereits soweit fortgeschritten ist, daß das Ausschwenken des Pflugrahmens die Drehbewegung nicht mehr stört. Im übrigen arbeitet die Folgesteuerung gemäß Fig. 2 entsprechend der Folgesteuerung gemäß Fig. 1. Bei beiden Ausführungsformen der erfindungsgemäßen Folgesteuerung sind jeweils die Öffnungskolben der Ventile 13 und 18 mit Blendenbohrungen versehen, um bei einer Leckage eine Öffnung der Ventile zu verhindern.

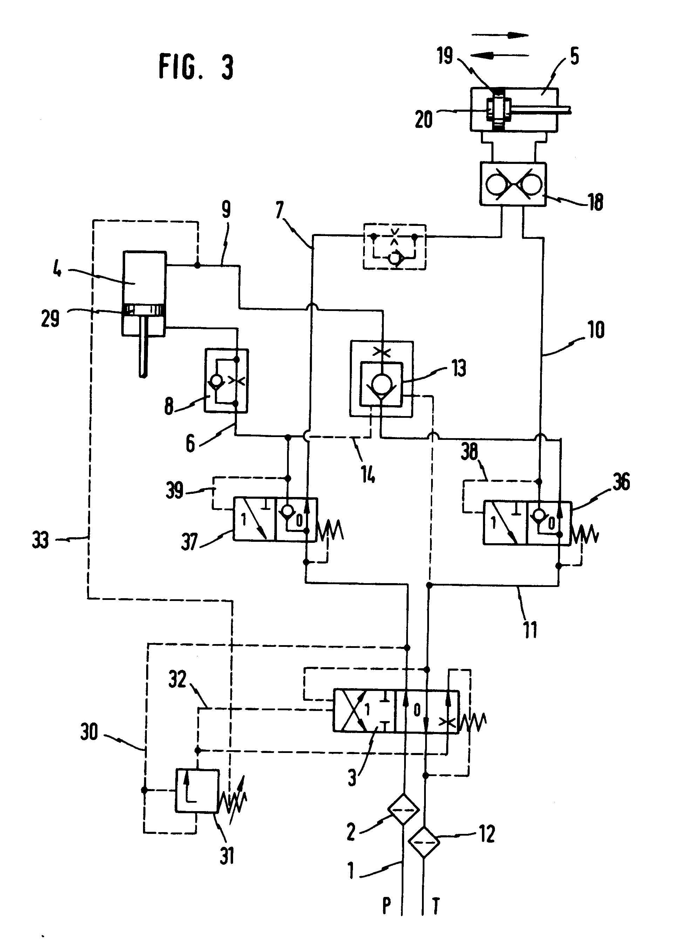

Fig. 3 zeigt ein drittes Ausführungsbeispiel einer erfindungsgemäßen Schaltung. Gleiche bzw. entsprechende Bauelemente sind, wie auch in den nachfolgenden Figuren, mit den gleichen Bezugszeichen bezeichnet wie in Fig. 1.

In dem Ausführungsbeispiel gemäß Fig. 3 fehlen die Ventilanordnungen 15 bis 17 und 24 bis 28 des Ausführungsbeispiels gemäß der Fig. 1. Stattdessen wird die Folgesteuerung beim Ausführungsbeispiel gemäß Fig. 3 mit anderen Elementen verwirklicht.

Die Rücklaufleitungen 9, 10 der Zylinder 4 und 5, die sich zur Rücklaufleitung 11 vereinigen, sind im Bereich ihrer Vereinigung mit einem 3/2-Wegeventil ausgerüstet, welches als Steuerventilanordnung 36 zur Regelung des Rücklaufdurchflusses fungiert. Eine entsprechende Steuerventilanordnung 37 findet sich in den Zuleitungen 1 bzw. 6, 7, da diese Zuleitungen nach Umschaltung des Steuerventils 3 in der zweiten Drehphase des Pfluges zu Rücklaufleitungen werdn. Die Steuerventilanordnungen 36, 37 werden über Steuerleitungen 38, 39 gesteuert. Bei der gezeigten Schaltstellung des Steuerventils 3 ist einsichtig, daß die Steuerleitung 38 für die erste Drehphase des Drehpfluges mit der Rücklaufleitung 10 des Schwenkzylinders 5 verbunden ist, so daß eine Betätigung der Steuerventilanordnung 36 in die Schaltstellung 1 durch das aus dem Schwenkzylinder 5 abfließende Hydraulikmittel erfolgt.

Die Steuerventilanordnung 36 bzw. 37 weist für ihre Schaltstellung 0 einen Durchflußweg für den Rücklauf des Drehzylinders 4 und ein Rückschlagventil für den Rücklauf des Schwenkzylinders 5 auf. In der Schaltstellung 1 ist ein Durchfluß für den Rücklauf des Schwenkzylinders 5 und eine Sperrung für den Rücklauf des Drehzylinders 4 vorhanden.

Das Ausführungsbeispiel gemäß der Fig. 3 arbeitet daher folgendermaßen:

Soll der Drehpflug gedreht werden, wird Hydraulikmittel über die Zuleitung 1 in die beiden Zylinder 4, 5 gepumpt. Die Rückschlagventile 13 und 18 sind dabei offen bzw. werden geöffnet (Steuerleitung 14), so daß abfließendes Hydraulikmittel aus beiden Zylindern 4, 5 an der Steuerventilanordnung 36 ansteht. Das abfließende Hydraulikmittel aus dem Schwenkzylinder 5 ist allerdings bevorzugt, da es über die Steuerleitung 38 die Steuerventilanordnung 36 in die Schaltstellung 1 betätigen kann, so daß nur der Abfluß für das Hydraulikmittel aus dem Schwenkzylinder 5 frei ist. Dies ist der Fall, solange abfließendes Hydraulikmittel aus dem Schwenkzylinder 5 in der Steuerleitung 38 ansteht, d.h. solange überhaupt Hydraulikmittel aus dem Schwenkzylinder 5 abfließt. Erst wenn dieser Abfluß beendet ist, kehrt die Steuerventilanordnung 36 in ihre Schaltstellung 0 zurück, wodurch dann der Abfluß des Hydraulikmittels aus dem Drehzylinder 4 freigegeben wird. Dies bedeutet, daß mit dem Schwenkzylinder 5 zunächst der Pflugrahmen eingeschwenkt wird und die erste Drehphase durch den Drehzylinder 4 erst streng nachfolgend nach dieser Einschwenkung erfolgen kann.

Zur Einleitung dem zweiten Drehphase wird das Steuerventil 3 umgeschaltet. Hierdurch wird die Steuerventilanordnung 37 in die entsprechende Funktion gesetzt, die vorher die Steuerventilanordnung 36 hatte. Bei dieser Steuerventilanordnung 37 ist über die Steuerleitung 39 das abfließende Hydraulikmittel aus dem Drehzylinder 4 bevorzugt, so daß in der zweiten Drehphase zunächst der Drehzylinder den Pflugrahmen weiterdreht, bevor der Pflugrahmen durch den Schwenkzylinder 5, in strenger Nachfolge, wieder ausgeschwenkt wird.

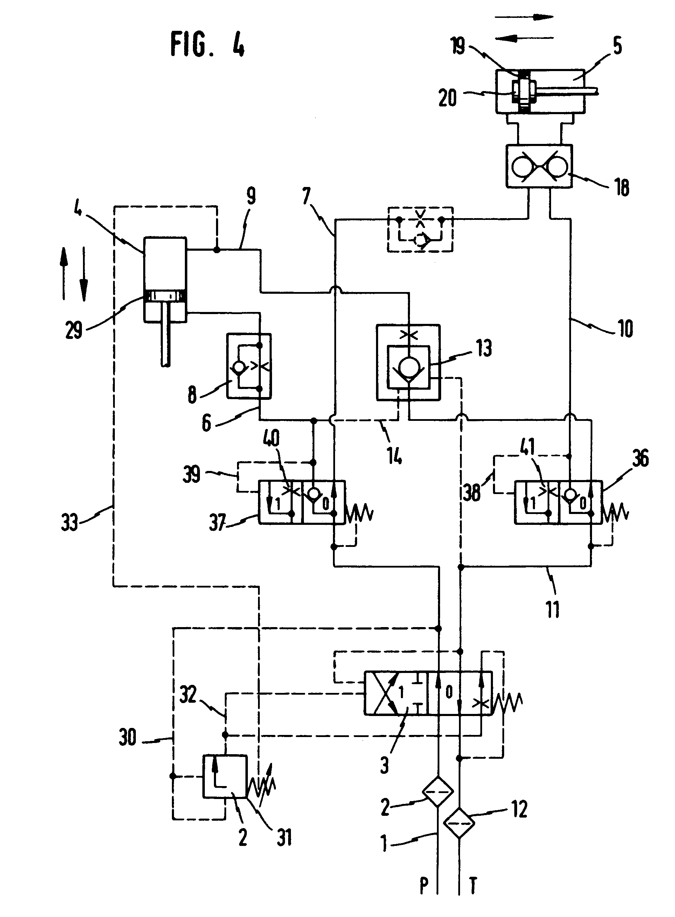

Die Schaltung gemäß Fig. 4 entspricht im wesentlichen dem Ausführungsbeispiel der Fig. 3. In den Steuerventilanordnungen 36, 37 ist jedoch in der Schaltstellung 1 jeweils der gesperrte Durchflußweg durch einen gedrosselten Weg mit Blenden 40, 41 ersetzt. Hierdurch wird die Folgesteuerung gemäß der Fig. 3 zu einer Vorrangschaltung mit überlagerten Parallellauf. Hydraulikmittel kann über die Blenden 40 bzw. 41 aus dem jeweils nachrangigen Zylinder 4, 5 abfließen, so daß sich auch dieser nachrangige Zylinder bewegt, wenn auch in einem Kriechgang.

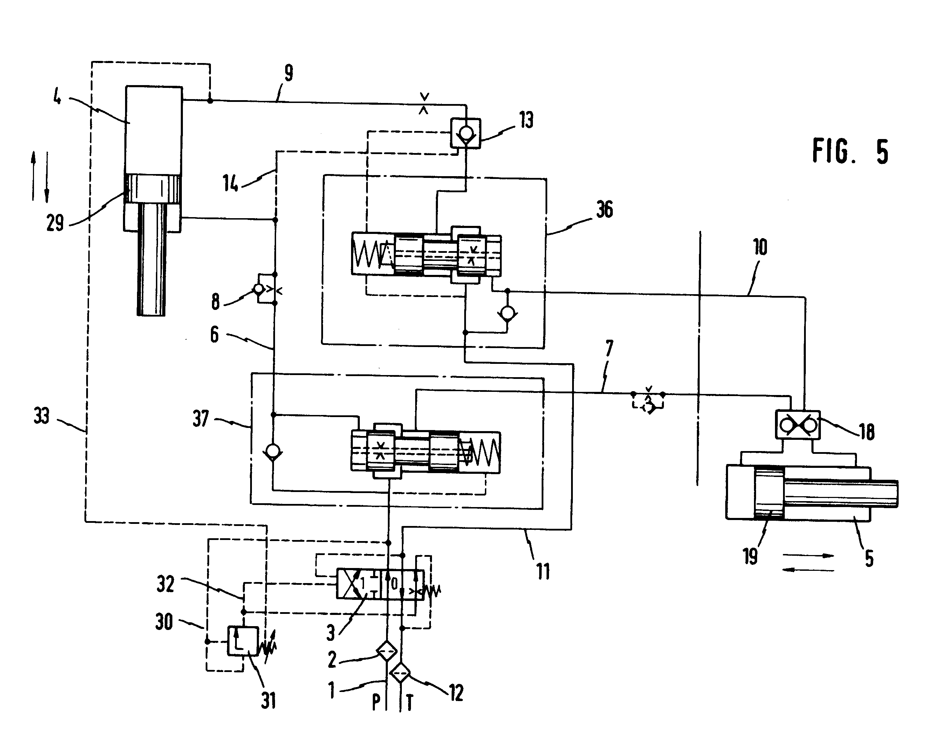

Figur 5 zeigt ein viertes Ausführungsbeispiel einer erfindungsgemäßen Schaltung. Das Ausführungsbeispiel gemäß Fig. 5 ist eine Folgeschaltung entsprechend dem Ausführungsbeispiel der Fig. 3. Lediglich die Steuerventilanordnungen 36, 37 sind bei dem Ausführungsbeispiel gemäß Fig. 5 anders verwirklicht als bei dem Ausführungsbeispiel gemäß Fig. 3. Im übrigen stimmen die Ausführungsbeispiele funktionell überein.

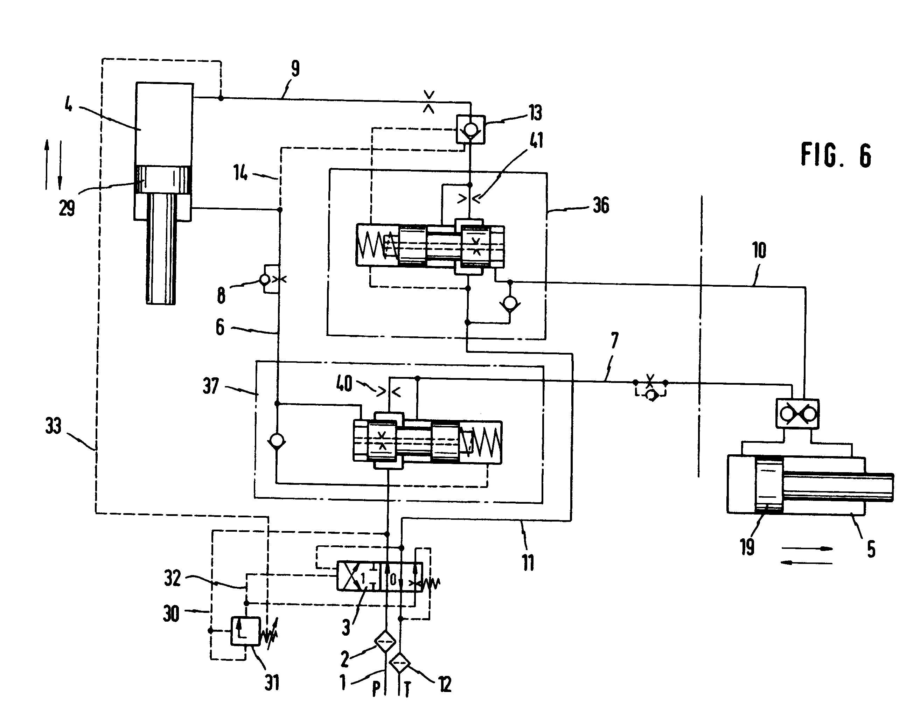

Die Fig. 6 zeigt ein Ausführungsbeispiel mit den Bauelementen gemäß der Fig. 5 als Vorrangschaltung entsprechend dem Ausführungsbeispiel gemäß der Fig. 4. Insbesondere sind auch Blenden 40, 41 bei diesem Ausführungsbeispiel gemäß der Fig. 6 vorhanden.

## Patentansprüche

1. Folgesteuerung bzw. Vorrangschaltung für einen Drehpflug mit Pflugrahmeneinschwenkung, wobei der Drehpflug über einen doppeltwirkenden Drehzylinder (4) zur Drehung des Pflugrahmens und einen doppeltwirkenden Schwenkzylinder (5) zum Ein- und Ausschwenken des Pflugrahmens verfügt, welche zueinander parallel geschaltet und über ein vorzugsweise gemeinsames Steuerventil (3) in den Zu- und Rücklaufleitungen betätigbar sind, wobei die (zum Beispiel kolbenseitige) Rücklaufleitung (9) des Drehzylinders (4) ein zu diesem hin öffnendes Rücklaufsperrventil (13) aufweist, welches mittels einer ersten Drucksteuerleitung (14) druckabhängig derartig gesteuert wird, daß es die Rücklaufleitung (9) erst bei Übersteigen des Drucks in der Drucksteuerleitung (14) über einen vorgegebenen Schwellwert öffnet, wobei die erste Drucksteuerleitung (14) über ein druckabhängig schaltendes Schaltorgan an die (z.B. kolbenstangenseitige) Zuleitung (6) des Drehzylinders (4) angeschlossen ist, mit einer ein gesteuertes Ventil (24, 34) umfassenden Steuereinrichtung in der zum Einfahren des Schwenkzylinders (5) als Zuleitungfungierenden (z.B. kolbenstangenseitigen) Rücklaufleitung (10) des Schwenkzylinders (5), deren Ventil (24, 34) so gesteuert ist, daß es die Rücklaufleitung (10) des Schwenkzylinders (5) bei ausgefahrenem Schwenkzylinder (5) nach einer Schließphase erst ab einer vorbestimmten Stellung des Drehzylinders vor Abschluß der Drehung des Pflugrahmens wieder freigibt,
**dadurch gekennzeichnet,**
daß das druckabhängige Schaltorgan zur Vorgabe des Schwellwertes ein Druckventil (15) in der ersten Steuerleitung (14) ist, wobei das Druckventil (15) ein über eine Ventilsteuerleitung (17), die von der ersten Steuerleitung (14) für das Rücklaufsperrventil abzweigt, gegen eine dem vorzugebenden Druckschwellwert entsprechende Rückstellkraft betätigbares 2/2-Ventil ist, welches in Ruhestellung gesperrt ist, und der Ruhestellungsdurchgang des 2/2-Ventils ein in Richtung auf das Rücklaufsperrventil sperrendes zweites Rückschlagventil (16) ist.

2. Folgesteuerung nach Anspruch 1, dadurch gekennzeichnet, daß die Rücklaufleitung (9) des Drehzylinders (4) kolbenseitig angeordnet ist.

3. Folgesteuerung nach Anspruch 1, dadurch gekennzeichnet, daß das erste Rückschlagventil (13) in seinem Öffnungskolben eine Blendenbohrung aufweist, um bei Leckage eine Öffnung zu verhindern.

4. Folgesteuerung nach Anspruch 1, dadurch gekennzeichnet, daß das gesteuerte Ventil (24) der Steuereinrichtung zeitgesteuert ist.

5. Folgesteuerung nach Anspruch 4, dadurch gekennzeichnet, daß die Steuereinrichtung derart eingestellt ist, daß das Ventil (24) etwa 3 s nach der halben Drehung des Pflugrahmens durch den Drehzylinder (4) öffnet.

6. Folgesteuerung nach Anspruch 4 oder 5, dadurch gekennzeichnet, daß der Drehzylinder (4) über das den Zylindern (4, 5) gemeinsame Steuerventil (3) für eine Drehung des Pflugrahmens gesteuert zunächst ein- und dann wieder ausfährt und daß die Zeitsteuerung der Steuereinrichtung durch das Umschalten des gemeinsamen Steuerventils (3) auslösbar ist.

7. Folgesteuerung nach Anspruch 6, dadurch gekennzeichnet, daß das Steuerventil (3) in an sich bekannter Weise automatisch umschaltend ausgebildet ist.

8. Folgesteuerung nach einem oder mehreren der vorhergehenden Ansprüche, dadurch gekennzeichnet, daß die Rücklaufleitung (10) des Schwenkzylinders (5) entlang eines Abschnittes in zwei Zweige (21, 22) geteilt ist, daß in dem ersten Zweig (21) ein in Richtung auf den Schwenkzylinder (5) schließendes drittes Rückschlagventil (23) eingesetzt ist, daß im zweiten Zweig (22) ein 2/2-Ventil als gesteuertes Ventil (24) eingesetzt ist, welches in Ruhestellung gesperrt ist, wobei die Ruhestellung gegen eine der Größe nach vorgegebene Rückstellkraft durch eine zweite Steuerleitung (25) aufrechterhalten wird, durch welche Druckflüssigkeit aus der Zuleitung (7) des Schwenkzylinders (5) auf das Wegeventil wirkt, daß die zweite Steuerleitung (25) des Ventils (24) unterbrechbar ist und daß ein Abfluß (27) zu der Rücklaufleitung (10) in der unterbrochenen zweite Steuerleitung (25) vorgesehen ist, durch welchen Abfluß ein der Rückstellkraft entgegen- wirkendes Polster von Steuerflüssigkeit mit einer vorgegebenen Zeitkonstante abfließen kann.

9. Folgesteuerung nach Anspruch 8, dadurch gekennzeichnet, daß eine mit der Rücklaufleitung (10) verbundene dritte Steuerleitung (35) vorgesehen ist, die auf das Ventil (24) in Richtung der Rückstellkraft wirkt.

10. Folgesteuerung nach Anspruch 8 oder 9, dadurch gekennzeichnet, daß die zweite Steuerleitung (25) des gesteuerten Ventils (24) der Steuereinrichtung zu ihrer Unterbrechung ein in Richtung auf das gesteuerte Ventil (24) öffnendes viertes Rückschlagventil (26) aufweist und daß der im Bereich zwischen diesem und dem gesteuerten Ventil (24) befindliche Abfluß (27) für das Steuermittel eine Blende (28) aufweist.

11. Folgesteuerung nach Anspruch 9 oder 10, dadurch gekennzeichnet, daß der Abfluß (27) zur Rückstellkraftseite des Ventils (24) führt und daß die Ausbildung des Abflusses (27) und die Größe der Rückstellkraft zur Einstellung der gewünschten Zeitsteuerung aufeinander abgestimmt sind.

12. Folgesteuerung nach Anspruch 1, dadurch gekennzeichnet, daß das gesteuerte Ventil (34) der Steuereinrichtung ein Drehventil ist, dessen Durchgänge drehwinkelabhängig in Funktion treten, und daß der Drehwinkel des Drehventils von der Drehstellung des Pflugrahmens abhängig ist.

13. Folgesteuerung nach Anspruch 12, dadurch gekennzeichnet, daß das Drehventil über die Pflugdrehwelle angetrieben ist.

14. Folgesteuerung nach Anspruch 12 oder 13, dadurch gekennzeichnet, daß das Drehventil (34) so ausgebildet ist, daß es wenigstens bis zum Ausfahren des Schwenkzylinders (5) geöffnet ist und nach einer darauffolgenden Schließphase erst wieder etwa 20° bis 30° vor dem Abschluß der Drehung des Pflugrahmens zum Einfahren des Schwenkzylinders (5) öffnet.

15. Folgesteuerung nach Anspruch 1, dadurch gekennzeichnet, daß die Steuereinrichtung (36, 37) wenigstens ein Wegeventil umfaßt, und daß das Betätigungselement eine Steuerleitung (38, 39) ist, die mit der zu bevorzugenden Rücklaufleitung (10 bzw. 6) in Verbindung steht.

16. Folgesteuerung nach Anspruch 15, dadurch gekennzeichnet, daß die Rücklaufleitungen stromabwärts der Steuereinrichtung (36, 37) zu einer Rücklaufleitung (11 bzw. 1) vereinigt sind und daß das Wegeventil (3/2-Wegeventil) beiden Rücklaufleitungen gemeinsam ist.

17. Folgesteuerung nach Anspruch 15 oder 16, dadurch gekennzeichnet, daß das Wegeventil einen Durchflußweg für die vorrangige Rücklaufleitung und einen gesperrten Weg für die nachrangige Rücklaufleitung umfaßt.

18. Folgesteuerung nach Anspruch 15 oder 16, dadurch gekennzeichnet, daß das Wegeventil einen ungedrosselten Durchflußweg für die vorrangige Rücklaufleitunng und einen gedrosselten Durchflußweg, mit Blende (40, 41) oder Drossel, für die nachrangige Rücklaufleitung aufweist.

19. Folgesteuerung nach einem der Ansprüche 15 bis 18, dadurch gekennzeichnet, daß das Wegeventil für eine zweite Schaltstellung (Schaltstellung Null) einen Durchflußweg für die nachrangige Rücklaufleitung und einen Weg mit zum vorrangigen Zylinder öffnenden Rückschlagventil aufweist, wobei diese zweite Schaltstellung bei beendetem Rücklauf des vorrangigen Zylinders und bei Umschaltung der Rücklaufleitung in Zulaufleitungen vorgesehen ist.

20. Folgesteuerung nach Anspruch 19, dadurch gekennzeichnet, daß in den jeweiligen Rücklaufleitungen und Zulaufleitungen der Zylinder (4, 5) ein solches Wegeventil vorgesehen ist.

21. Verfahren zur Betätigung eines Drehpfluges mit Pflugrahmeneinschwenkung zum Wenden der Pflugkörper, wozu der Pflugrahmen des Drehpfluges mittels eines Schwenkzylinders eingeschwenkt, der Pflugrahmen mittels eines Drehzylinders gedreht und der Pflugrahmen mit dem Schwenkzylinder wieder ausgeschwenkt wird, wobei eine im wesentlichen aufeinanderfolgende Betätigung der beiden Zylinder dadurch erzwungen wird, daß eine der Zylinder, gegebenenfalls wechselweise, jeweils bevorrangt wird, indem der Hydraulikmittelfluß dieses Zylinders bevorzugt gegenüber jenem des anderen Zylinders durchgeführt wird, zur Durchführung einer Folgesteuerung nach einem der Ansprüche 1 bis 20, gekennzeichnet durch eine Steuerventilanordnung in den Rücklaufleitungen der Zylinder (4, 5) zugunsten des Hyraulik mittel abflusses des vorrangigen Zylinders in Abhängigkeit von diesem Hydraulikmittelabfluß selbst-geregelt bzw. betätigt wird.

22. Verfahren nach Anspruch 21, dadurch gekennzeichnet, daß die Zylinder (4, 5) streng aufeinanderfolgend betätigt werden, indem der Hydraulikmittelabfluß des nachrangigen Zylinders während des Hydraulikmittelabflusses des vorrangigen Zylinders gesperrt wird.

23. Verfahren nach Anspruch 22, dadurch gekennzeichnet, daß der nachrangige Zylinder zur Betätigung des vorrangigen Zylinders parallel überlagert, aber langsamer (im Kriechgang) betätigt wird, indem der Hydraulikmittelabfluß des nachrangigen Zylinders während des Hydraulik mittelabflusses des vorrangigen Zylinders gedrosselt wird.

## Claims

1. A sequential control or priority circuit for a swivel plough with plough frame retraction, wherein the swivel plough has a double-acting swivel cylinder (4) for swivelling the plough frame and a double-acting pivoting cylinder (5) for retraction and extension of the plough frame, which are connected in parallel with each other and which can be actuated by way of a preferably common control valve (3) in the feed and return lines, wherein the (for example piston-side) return line (9) of the swivel cylinder (4) has a non-return valve (13) which opens towards same and which is controlled in dependence on pressure by means of a first pressure control line (14) in such a way that it opens the return line (9) only when the pressure in the control pressure line (14) exceeds a predetermined threshold value, wherein the first pressure control line (14) is connected by way of a switching member which switches in dependence on pressure to the (for example piston rod-side) feed line (6) of the swivel cylinder (4), with a control means including a controlled valve (24, 34) in the (for example piston rod-side) return line (10) of the pivoting cylinder (5), said return line (10) acting as a feed line for retraction of the pivoting cylinder (5), the valve (24, 34) of the control means being so controlled that it re-opens the return line (10) of the pivoting cylinder (5) when the pivoting cylinder (5) is extended after a closing phase only as from a predetermined position of the swivel cylinder prior to termination of the swivel movement of the plough frame, characterised in that the pressure-dependent switching member for presetting the threshold value is a pressure valve (15) in the first control line (14), wherein the pressure valve (15) is a 2/2-valve which is closed in the rest position and which is actuable against a return force corresponding to the pressure threshold value to be preset, by way of a valve control line (17) which branches from the first control line (14) for the non-return valve, and the rest position passage of the 2/2-valve is a second check valve (16) which closes in a direction towards the non-return valve.

2. A sequential control according to claim 1 characterised in that the return line (9) of the swivel cylinder (4) is arranged on the piston side.

3. A sequential control according to claim 1 characterised in that the first check valve (13) has in its opening piston an orifice bore in order to prevent opening upon leakage.

4. A sequential control according to claim 1 characterised in that the controlled valve (24) of the control means is time-controlled.

5. A sequential control according to claim 4 characterised in that the control means is so set that the valve (24) opens about three seconds after half the swivel movement of the plough frame by the swivel cylinder (4).

6. A sequential control according to claim 4 or claim 5 characterised in that the swivel cylinder (4) is firstly retracted and then extended again, controlled by way of the control valve (3) which is common to the cylinders (4, 5), for a swivel movement of the plough frame, and that the timing control of the control means can be triggered off by switching over of the common control valve (3).

7. A sequential control according to claim 6 characterised in that the control valve (3) is designed to switch over automatically in per se known manner.

8. A sequential control according to one or more of the preceding claims characterised in that the return line (10) of the pivoting cylinder (5) is divided into two branches (21, 22) along a portion, that a third check valve (23) which closes in a direction towards the pivoting cylinder (5) is fitted in the first branch (21), that a 2/2-valve which is closed in the rest position is fitted as the controlled valve (24) in the second branch (22), wherein the rest position is maintained against a return force which is predetermined in respect of magnitude, by a second control line (25) through which pressure fluid acts on the directional control valve from the feed line (7) of the pivoting cylinder (5), that the second control line (25) of the valve (24) can be interrupted and that there is provided a discharge (27) to the return line (10) in the interrupted second control line (25), through which discharge a cushion of control fluid, which counteracts the return force, can flow away with a predetermined time constant.

9. A sequential control according to claim 8 characterised in that there is provided a third control line (35) which is connected to the return line (10) and which acts on the valve (4) in the direction of the return force.

10. A sequential control according to claim 8 or claim 9 characterised in that the second control line (25) of the controlled valve (24) of the control means is provided, for interruption thereof, with a fourth check valve (26) which opens in a direction towards the controlled valve (24) and that the discharge (27) for the control agent which is disposed in the region between said check valve and said controlled valve (24), has an orifice (28).

11. A sequential control according to claim 9 or claim 10 characterised in that the discharge (27) leads to the return force side of the valve (24) and that the configuration of the discharge (27) and the magnitude of the return force are matched to each other to set the desired time control.

12. A sequential control according to claim 1 characterised in that the controlled valve (34) of the control means is a rotary valve, the passages of which come into operation in dependence on the angle of rotation, and that the angle of rotation of the rotary valve is dependent on the swivel position of the plough frame.

13. A sequential control according to claim 12 characterised in that the rotary valve is driven by way of the plough swivel shaft.

14. A sequential control according to claim 12 or claim 13 characterised in that the rotary valve (34) is so designed that it is opened at least until extension of the pivoting cylinder (5) occurs and it opens again after a subsequent closing phase only about 20° to 30° prior to termination of the swivel movement of the plough frame for retraction of the pivoting cylinder (5).

15. A sequential control according to claim 1 characterised in that the control means (36, 37) includes at least one directional control valve and that the actuating element is a control line (38, 39) which is communicated with the return line (10 and 6 respectively) which is to be preferred.

16. A sequential control according to claim 15 characterised in that the return lines are combined downstream of the control means (36, 37) to provide a return line (11 and 1 respectively) and that the directional control valve (3/2-way valve) is common to both return lines.

17. A sequential control according to claim 15 or claim 16 characterised in that the directional control valve includes a through-flow path for the priority return line and a blocked path for the non-priority return line.

18. A sequential control according to claim 15 or claim 16 characterised in that the directional control valve has an unthrottled through-flow path for the priority return line and a throttled through-flow path with orifice (40, 41) or throttle for the non-priority return line.

19. A sequential control according to one of claims 15 to 18 characterised in that the directional control valve, for a second switching position (switching position zero), has a through-flow path for the non-priority return line and a path with check valve which opens to the priority cylinder, wherein said second switching position is provided upon terminated return of the priority cylinder and upon switching-over of the return line into feed tines.

20. A sequential control according to claim 19 characterised in that such a directional control valve is respectively provided in the return lines and feed lines of the cylinders (4, 5).

21. A method of actuating a swivel plough with plough frame retraction for turning the plough bodies, for which purpose the plough frame of the swivel plough is retracted by means of a pivoting cylinder, the plough frame is swivelled by means of a swivel cylinder and the plough frame is extended again with the pivoting cylinder, wherein substantially successive actuation of the two cylinders is compelled by the fact that one of the cylinders is respectively prioritised, possibly alternately, by the hydraulic medium flow of said cylinder being provided preferably relative to that of the other cylinder, for providing a sequential control according to one of claims 1 to 20, characterised by a control valve arrangement which is regulated or actuated in the return lines of the cylinders (4, 5) to the favour of the hydraulic medium discharge of the priority cylinder in dependence on said hydraulic medium discharge itself.

22. A method according to claim 21 characterised in that the cylinders (4, 5) are actuated in strict succession by the hydraulic medium discharge of the non-priority cylinder being shut off during the hydraulic medium discharge of the priority cylinder.

23. A method according to claim 22 characterised in that the non-priority cylinder is actuated in superposed relationship parallel to actuation of the priority cylinder but more slowly (in a creep mode of operation) by the hydraulic medium discharge of the non-priority cylinder being throttled during the hydraulic medium discharge of the priority cylinder.

## Revendications

1. Commande de séquence ou commande de priorité pour une charrue réversible comportant un basculement du chassis, la dite charrue réversible disposant d'un vérin de rotation (4) à double action pour la rotation du chassis et d'un vérin de basculement (5) à double action pour le basculement vers l'intérieur et vers l'extérieur du dit chassis, les deux vérins étant montés en parallèle et pouvant être manoeuvrés par une vanne de commande (3), de préférence commune, se trouvant dans les conduites d'aller et de retour, la conduite de retour (9) (par exemple du côté du piston) du vérin de rotation (4) présentant un clapet anti-retour (13) s'ouvrant en direction du dit vérin, lequel clapet est commandé en fonction de la pression au moyen d'une première conduite de commande sous pression (14), de telle sorte qu'il ouvre la conduite de retour (9) uniquement si la pression qui règne dans la conduite (14) dépasse une valeur limite prédéterminée, la dite première conduite de commande sous pression (14) étant raccordée, par un organe de commande fonction de la pression, à la conduite d'arrivée (6) (par exemple, du côté de la tige du piston) du vérin de rotation (4) comportant un dispositif de commande comprenant une vanne pilotée (24, 34) disposée dans la conduite de retour (10) du vérin de basculement (5) (placée par exemple du côté de la tige du piston), cette conduite faisant fonction de conduite d'aller pour la rentrée du vérin de basculement (5), la vanne (24, 34) de cette conduite (10) étant commandée de telle sorte que, lorsque le vérin (5) est sorti, elle dégage à nouveau la dite conduite (10) du dit vérin (5), aprés une phase de fermeture, seulement à partir d'une position prédéterminée du vérin de rotation, avant l'achèvement de l'inversion du chassis de la charrue, **CARACTERISEE** en ce que l'organe de commande fonction de la pression servant à prédéterminer la valeur limite est une vanne (15) pilotée par une pression, montée dans la première conduite de commande (14), la dite vanne (15) étant une vanne 2/2 pouvant s'opposer à une force de recul correspondant à la valeur de la pression limite à prédéterminer, à travers une conduite de commande (17) dérivant de la première conduite de commande (14) vers le clapet anti-retour, la dite vanne 2/2 étant fermée en position de repos et constituant un deuxième clapet anti-retour (16) qui se bloque en direction du premier clapet anti-retour.

2. Commande de séquence selon la revendication 1 **caractérisée** en ce que la conduite de retour (9) du vérin de rotation (4) est disposée du côté du piston.

3. Commande de séquence selon la revendication 1 **caractérisée** en ce que le premier clapet anti-retour (13) présente, dans son piston d'ouverture, un alésage à diaphragme pour éviter toute ouverture en cas de fuite.

4. Commande de séquence selon la revendication 1 **caractérisée** en ce que la vanne pilotée (24) du dispositif de commande est chronorégulée.

5. Commande de séquence selon la revendication 4 **caractérisée** en ce que le dispositif de commande est réglé de telle sorte que la vanne (24) s'ouvre environ trois secondes aprés la demi-rotation du chassis de la charrue sous l'effet du vérin de rotation (4).

6. Commande de séquence selon la revendication 4 ou 5 **caractérisée** en ce que le vérin de rotation (4), commandé par la vanne de commande commune aux vérins (4, 5) pour que le chassis exécute une rotation, commence d'abord par entrer et ensuite ressortir, et en ce que la chronorégulation du dispositif de commande peut être déclenchée par la commutation de la vanne de commande commune (3).

7. Commande de séquence selon la revendication 6 **caractérisée** en ce que la vanne de commande (3) est réalisée à commutation automatique, de manière connue.

8. Commande de séquence selon l'une ou plusieurs des revendications précédentes **caractérisée** :
- en ce que la conduite de retour (10) du vérin de basculement (5) est divisée, le long d'une section, en deux branches (21, 22),
- en ce que dans la première branche (21) est inséré un troisième clapet anti-retour (23) se fermant en direction du vérin de basculement (5),
- en ce que dans la deuxième branche (22) est insérée une vanne 2/2 faisant office de vanne pilotée (24), laquelle est fermée en position de repos, la dite position de repos étant maintenue, par rapport à une force de rappel d'importance prédéterminée, par une deuxième conduite de commande (25) à travers laquelle le fluide sous pression venant de la conduite d'amenée (7) du vérin de basculement (5) agit sur la vanne (24),
- en ce que la deuxième conduite de commande (25) de la dite vanne (24) peut être interrompue et que, dans cette deuxième conduite (25) est prévu un écoulement (27) vers la conduite de retour (10), écoulement à travers lequel peut s'écouler, pendant une constante de temps prédéterminée, une quantité de fluide de commande exerçant un effet tampon s'opposant à la force de rappel.

9. Commande de séquence selon la revendication 8 **caractérisée** par la présence d'une troisième conduite de commande (35) reliée à la conduite de retour (10) et qui agit sur la vanne (24) en direction de la force de rappel.

10. Commande de séquence selon la revendication 8 ou 9 **caractérisée** en ce que la deuxième conduite de commande (25) de la vanne pilotée (24) du dispositif de commande présente, en vue de son interruption, un quatrième clapet anti-retour (26) s'ouvrant en direction de la vanne (24) et que l'écoulement (27) se trouvant entre ce clapet et la dite vanne (24) est muni d'un diaphragme (28) pour le fluide de commande.

11. Commande de séquence selon la revendication 9 ou 10 **caractérisée** en ce que l'écoulement (27) est dirigé vers le côté force de rappel de la vanne (24) et en ce que la configuration de l'écoulement (27) et la valeur de la force de rappel sont accordées l'une sur l'autre en vue de la mise en place de la chronorégulation souhaitée.

12. Commande de séquence selon la revendication 1 **caractérisée** en ce que la vanne pilotée (34) du dispositif de commande est une vanne rotative dont les passages deviennent opérationnels en fonction d'un angle de rotation et en ce que l'angle de rotation de cette vanne est fonction de la position de rotation du chassis de la charrue.

13. Commande de séquence selon la revendication 12 **caractérisée** en ce que la vanne rotative est entraînée par l'arbre de rotation de la charrue.

14. Commande de séquence selon la revendication 12 ou 13 **caractérisée** en ce que la vanne rotative (34) est réalisée de telle sorte qu'elle est ouverte au moins jusqu'à la sortie du vérin de basculement (5) et, aprés une phase de fermeture consécutive, ne s'ouvre à nouveau que 20° à 30° avant l'achèvement de la rotation du chassis de la charrue pour permettre au vérin de rotation (5) de rentrer.

15. Commande de séquence selon la revendication 1 **caractérisée** en ce que le dispositif de commande (36, 37) comprend au moins une vanne à plusieurs voies et que l'élément de manoeuvre est une conduite de commande (38, 39), laquelle est en liaison avec la conduite de retour à favoriser (10 ou 6).

16. Commande de séquence selon la revendication 15 **caractérisée** en ce que les conduites de retour sont réunies en aval du dispositif de commande (36, 37) pour constituer une conduite de retour unique (11 ou 1) et en ce que la vanne à plusieurs voies (3/2 voies) est commune pour ces deux conduites de retour.

17. Commande de séquence selon la revendication 15 ou 16 **caractérisée** en ce que la vanne à plusieurs voies comprend une voie de passage pour la conduite de retour prioritaire et une voie bloquée pour la conduite de retour non prioritaire.

18. Commande de séquence selon la revendication 15 ou 16 **caractérisée** en ce que la vanne à plusieurs voies présente une voie de passage sans étranglement pour la conduite de retour prioritaire et une voie de passage à étranglement munie d'un diaphragme (40, 41) ou d'un papillon, pour la conduite de retour non prioritaire.

19. Commande de séquence selon l'une des revendications 15 à 18 **caractérisée** en ce que la vanne à plusieurs voies présente, pour une deuxième position de commande (position zéro), une voie de passage pour la conduite de retour non prioritaire et une voie équipée d'un clapet anti-retour s'ouvrant en direction du vérin prioritaire, cette deuxième position de commande étant prévue lorsque le retour du fluide venant du vérin prioritaire est achevé et lorsque la conduite de retour est commutée en conduite d'aller.

20. Commande de séquence selon la revendication 19 **caractérisée** en ce que, dans les conduites de retour et les conduites aller respectives des vérins (4, 5) est prévue une telle vanne à plusieurs voies.

21. Procédé pour la manoeuvre d'une charrue réversible ou charrue brabant, comportant un dispositif de basculement du chassis pour la rotation du corps de la charrue, le chassis de la dite charrue étant basculé vers l'intérieur au moyen d'un vérin de basculement, tourné au moyen d'un vérin de rotation et ensuite basculé à nouveau vers l'extérieur à l'aide du vérin de basculement, l'exécution pratiquement consécutive des manoeuvres des deux vérins étant obtenue étant donné que l'un de ces vérins, éventuellement alternativement, est respectivement prioritaire du fait que l'écoulement du fluide hydraulique de ce vérin s'effectue prioritairement par rapport à celui de l'autre vérin, afin de mettre en oeuvre une commande de séquence conforme à l'une des revendications 1 à 20, **caractérisé** par la présence, dans les conduites de retour des vérins (4, 5), d'un agencement de vannes de commande, lesquelles, pour favoriser le flux de retour du fluide hydraulique venant du vérin prioritaire, sont auto-régulées ou manoeuvrées, en fonction de ce flux de retour.

22. Procédé selon la revendication 21 **caractérisé** en ce que les vérins (4, 5) sont manoeuvrés de manière strictement consécutive, le flux de retour du fluide hydraulique venant du vérin non prioritaire étant bloqué pendant le flux de retour venant du vérin prioritaire.

23. Procédé selon la revendication 22 **caractérisé** en ce que le vérin non prioritaire est privilégié parallèlement pour la manoeuvre du vérin prioritaire, mais qu'il agit plus lentement (au ralenti), du fait que le flux de retour du fluide hydraulique venant du vérin non prioritaire est freiné pendant le flux de retour du fluide hydraulique venant du vérin prioritaire.
